(19) Europäisches Patentamt / European Patent Office / Office européen des brevets

(11) **EP 2 733 874 A2**

(12) **EUROPEAN PATENT APPLICATION**
published in accordance with Art. 153(4) EPC

(43) Date of publication:
**21.05.2014 Bulletin 2014/21**

(51) Int Cl.:
*H04J 11/00* (2006.01)    *H04B 7/26* (2006.01)

(21) Application number: **12811554.0**

(22) Date of filing: **10.07.2012**

(86) International application number:
**PCT/KR2012/005449**

(87) International publication number:
**WO 2013/009068 (17.01.2013 Gazette 2013/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2011   US 201161506625 P**
**15.07.2011   US 201161508077 P**
**22.07.2011   US 201161510497 P**
**11.08.2011   US 201161522253 P**
**04.09.2011   US 201161531002 P**

(71) Applicant: **LG Electronics Inc.**
**Yeongdeungpo-gu**
**Seoul 150-721 (KR)**

(72) Inventors:
• **LEE, Hyun Woo**
**Anyang-si**
**Gyeonggi-do 431-749 (KR)**

• **SON, Hyuk Min**
**Anyang-si**
**Gyeonggi-do 431-749 (KR)**
• **CHOI, Hye Young**
**Anyang-si**
**Gyeonggi-do 431-749 (KR)**
• **HAN, Seung Hee**
**Anyang-si**
**Gyeonggi-do 431-749 (KR)**
• **KIM, Jin Min**
**Anyang-si**
**Gyeonggi-do 431-749 (KR)**

(74) Representative: **Cabinet Plasseraud**
**52, rue de la Victoire**
**75440 Paris Cedex 09 (FR)**

(54) **METHOD AND APPARATUS FOR PERFORMING RANDOM ACCESS IN WIRELESS COMMUNICATION SYSTEM**

(57)    Provided are a method and an apparatus for performing random access in a wireless communication system. A terminal receives from a base station a physical downlink control channel (PDCCH) indication, which indicates an initiation of the random access with respect to a secondary cell (SCell), based on whether a cross-carrier scheduling is supported by the SCell; transmits a physical random access channel (PRACH) preamble to the base station through the SCell; and transmits a RACH response as a response to the PRACH preamble, based on whether the SCell supports the cross-carrier scheduling, wherein the SCell and a primary cell (PCell) comprises a carrier aggregation (CA) system, the PCell is a cell from which the terminal performs radio resource control (RRC) connection with the base station, and wherein the SCell is at least one cell from residual cells in the carrier aggregation excluding the PCell.

FIG. 10

EP 2 733 874 A2

**Description**

**BACKGROUND OF THE INVENTION**

Field of the Invention

The present invention relates to wireless communications, and more particularly, to a method and apparatus for performing a random access in a wireless communication system.

Related Art

The next-generation multimedia wireless communication systems which are recently being actively researched are required to process and transmit various pieces of information, such as video and wireless data as well as the initial voice-centered services. The 4th generation wireless communication systems which are now being developed subsequently to the 3rd generation wireless communication systems are aiming at supporting high-speed data service of downlink 1 Gbps (Gigabits per second) and uplink 500 Mbps (Megabits per second). The object of the wireless communication system is to establish reliable communications between a number of users irrespective of their positions and mobility. However, a wireless channel has abnormal characteristics, such as path loss, noise, a fading phenomenon due to multipath, inter-symbol interference (ISI), and the Doppler Effect resulting from the mobility of a user equipment. A variety of techniques are being developed in order to overcome the abnormal characteristics of the wireless channel and to increase the reliability of wireless communication.

A carrier aggregation (CA) which supports a plurality of cells may be applied in a 3GPP LTE-A. The CA may be referred to as another name such as a bandwidth aggregation. The CA refers to forming a broadband by collecting one or more carrier having a bandwidth smaller than the broadband when a wireless communication system tries to support the broadband. The carrier which becomes a subject when collecting one or more carrier may use the bandwidth which is used in the existing system for backward compatibility. For example, in 3GPP LTE, the bandwidths of 1.4MHz, 3MHz, 5MHz, 10GHz, 15GHz, and 20MHz are supported, and in 3GPP LTE-A, the broadband of more than 20MHz may be formed by using only the bandwidth of the 3GPP LTE system. Furthermore, the broadband may be formed by defining a new bandwidth without using the bandwidth of the conventional system as itself.

A random access procedure is a procedure which is performed for a user equipment (UE) to connect to a base station. The random access procedure is initialized by the base station, and the UE transmits a physical random access channel (PRACH) preamble to the base station. The base station transmits a RACH response to the UE as a response to the PRACH preamble. Furthermore, as the CA is supported, a cross carrier scheduling may be supported. As such, a plurality of messages which are exchanged between the UE and the base station in the random access procedure may be transmitted through different cells.

When the cross carrier scheduling is performed, there is a need for efficiently performing the random access.

**SUMMARY OF THE INVENTION**

The present invention provides a method and apparatus for performing a random access in a wireless communication system. The present invention provides a method for applying cross-carrier scheduling when performing a random access procedure in a secondary cell (SCell) in a wireless communication system.

In an aspect, a method of performing, by a user equipment (UE), a random access in a wireless communication system is provided. The method includes receiving, from a base station, a physical downlink control channel (PDCCH) order which orders initiation of the random access for a secondary cell (SCell), based on whether a cross-carrier scheduling of the SCell is supported, transmitting a physical random access channel (PRACH) preamble to the base station through the SCell, and transmitting a RACH response to the base station as a response to the PRARH preamble, based on whether the cross-carrier scheduling of the SCell is supported. The SCell and a primary cell (PCell) form a carrier aggregation (CA) system. The PCell is a cell where the UE performs a radio resource control (RRC) connection with the base station. The SCell is at least one cell among remaining cells other than the PCell in the CA system.

The PDCCH order may be received through the SCell.

The PDCCH order may be received through the PCell.

The PDCCH order may include a carrier indicator field (CIF) for a random access which indicates the SCell.

The PDCCH order may be received through at least one of a common search space (CSS) or a UE-specific search space (USS).

When the cross carrier scheduling of the SCell is supported, the PDCCH order may be received through a cell where the cross carrier scheduling is configured, and a CIF, included in the PDCCH, for a random access order may indicate a cell where the random access is performed.

The RACH response may be received through the PCell.

The RACH response may include a CIF which indicates the SCell.

The RACH response is received through the SCell.

When the cross carrier scheduling of the SCell is supported, the RACH response may be received through a cell where the cross carrier scheduling is configured, and a CIF, included in the RACH response, for a random access may indicate a cell where the PRACH preamble is transmitted.

The SCell may be an UL extension carrier which cannot operate as a stand-alone carrier.

The PCell may be a cell which provides at least one of non-access stratum (NAS) mobility information and a security input at the time of an RRC establishment, an RRC re-establishment, or a handover.

In another aspect, a user equipment (UE) for performing a random access in a wireless communication system is provided. The UE includes a radio frequency (RF) unit for transmitting or receiving a radio signal, and a processor which is connected with the RF unit, and configured to receive, from a base station, a physical downlink control channel (PDCCH) order which orders initiation of the random access for a secondary cell (SCell), based on whether a cross-carrier scheduling of the SCell is supported, transmit a physical random access channel (PRACH) preamble to the base station through the SCell, and transmit a RACH response to the base station as a response to the PRARH preamble, based on whether the cross-carrier scheduling of the SCell is supported. The SCell and a primary cell (PCell) form a carrier aggregation (CA) system. The PCell is a cell where the UE performs a radio resource control (RRC) connection with the base station. The SCell is at least one cell among remaining cells other than the PCell in the CA system.

A random access procedure may be effectively performed in a secondary cell (SCell).

## BRIEF DESCRIPTION OF THE DRAWINGS

FIG. 1 shows a wireless communication system.

FIG. 2 shows the structure of a radio frame in 3GPP LTE.

FIG. 3 shows an example of a resource grid of a single downlink slot.

FIG. 4 shows the structure of a downlink subframe.

FIG. 5 shows the structure of an uplink subframe.

FIG. 6 shows an example of a subframe structure of 3GPP LTE-A system which is cross-carrier-scheduled through CIF.

FIG. 7 shows an example where two cells have different UL transmission timings in a CA environment.

FIG. 8 shows an example of initializing a random access process for a SCell of a UE by an order of a base station.

FIG. 9 shows an example of a general random access process.

FIG. 10 shows an embodiment of a proposed method of performing a random access.

FIG. 11 shows another embodiment of a proposed method of performing a random access.

FIG. 12 shows another embodiment of a proposed method of performing a random access.

FIG. 13 shows another embodiment of a proposed method of performing a random access.

FIG. 14 is a block diagram showing wireless communication system to implement an embodiment of the present invention.

## DESCRIPTION OF EXEMPLARY EMBODIMENTS

The following technique may be used for various wireless communication systems such as code division multiple access (CDMA), a frequency division multiple access (FDMA), time division multiple access (TDMA), orthogonal frequency division multiple access (OFDMA), single carrier-frequency division multiple access (SC-FDMA), and the like. The CDMA may be implemented as a radio technology such as universal terrestrial radio access (UTRA) or CDMA2000. The TDMA may be implemented as a radio technology such as a global system for mobile communications (GSM)/general packet radio service (GPRS)/enhanced data rates for GSM evolution (EDGE). The OFDMA may be implemented by a radio technology such as institute of electrical and electronics engineers (IEEE) 802.11 (Wi-Fi), IEEE 802.16 (WiMAX), IEEE 802.20, E-UTRA (Evolved UTRA), and the like. IEEE 802.16m, an evolution of IEEE 802.16e, provides backward compatibility with a system based on IEEE 802.16e. The UTRA is part of a universal mobile telecommunications system (UMTS). 3rd generation partnership project (3GPP) long term evolution (LTE) is part of an evolved UMTS (E-UMTS) using the E-UTRA, which employs the OFDMA in downlink and the SC-FDMA in uplink. LTE-advanced (LTE-A) is an evolution of 3GPP LTE.

Hereinafter, for clarification, LTE-A will be largely described, but the technical concept of the present invention is not meant to be limited thereto.

FIG. 1 shows a wireless communication system.

The wireless communication system 10 includes at least one base station (BS) 11. Respective BSs 11 provide a communication service to particular geographical areas 15a, 15b, and 15c (which are generally called cells). Each cell may be divided into a plurality of areas (which are called sectors). A user equipment (UE) 12 may be fixed or mobile and may be referred to by other names such as mobile station (MS), mobile terminal (MT), user terminal (UT), subscriber station (SS), wireless device, personal digital assistant (PDA), wireless modem, handheld device. The BS 11 generally refers to a fixed station that communicates with the UE 12 and may be called by other names such as evolved-NodeB (eNB), base transceiver system (BTS), access point (AP), etc.

In general, a UE belongs to one cell, and the cell to which a UE belongs is called a serving cell. A BS providing a communication service to the serving cell is called a serving BS. The wireless communication system is a cellular system, so a different cell adjacent to the serving cell exists. The different cell adjacent to the serving cell is called a neighbor cell. A BS providing a communication service to the neighbor cell is called a neighbor BS. The serving cell and the neighbor cell are relatively determined based on a UE.

This technique can be used for downlink or uplink. In general, downlink refers to communication from the BS 11 to the UE 12, and uplink refers to communication from the UE 12 to the BS 11. In downlink, a transmitter may be part of the BS 11 and a receiver may be part of the UE 12. In uplink, a transmitter may be part of the UE 12 and a receiver may be part of the BS 11.

The wireless communication system may be any one of a multiple-input multiple-output (MIMO) system, a multiple-input single-output (MISO) system, a single-input single-output (SISO) system, and a single-input multiple-output (SIMO) system. The MIMO system uses a plurality of transmission antennas and a plurality of reception antennas. The MISO system uses a plurality of transmission antennas and a single reception antenna. The SISO system uses a single transmission antenna and a single reception antenna. The SIMO system uses a single transmission antenna and a plurality of reception antennas. Hereinafter, a transmission antenna refers to a physical or logical antenna used for transmitting a signal or a stream, and a reception antenna refers to a physical or logical antenna used for receiving a signal or a stream.

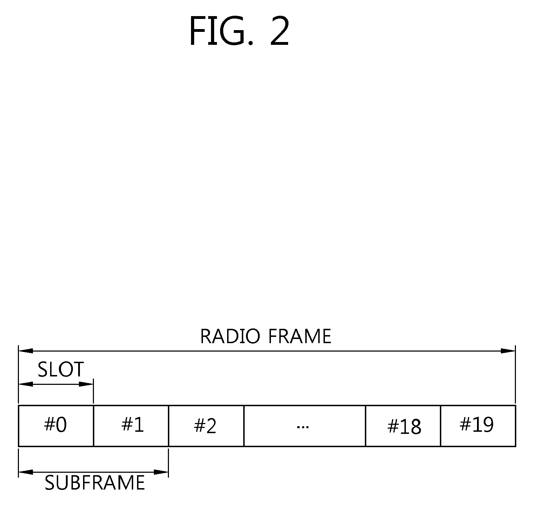

FIG. 2 shows the structure of a radio frame in 3GPP LTE.

It may be referred to Paragraph 5 of "Technical Specification Group Radio Access Network; Evolved Universal Terrestrial Radio Access (E-UTRA); Physical channels and modulation (Release 8)" to 3GPP (3rd generation partnership project) TS 36.211 V8.2.0 (2008-03). Referring to FIG. 2, the radio frame includes 10 subframes, and one subframe includes two slots. The slots in the radio frame are numbered by #0 to #19. A time taken for transmitting one subframe is called a transmission time interval (TTI). The TTI may be a scheduling unit for a data transmission. For example, a radio frame may have a length of 10 ms, a subframe may have a length of 1 ms, and a slot may have a length of 0.5 ms.

One slot includes a plurality of orthogonal frequency division multiplexing (OFDM) symbols in a time domain and a plurality of subcarriers in a frequency domain. Since 3GPP LTE uses OFDMA in downlink, the OFDM symbols are used to express a symbol period. The OFDM symbols may be called by other names depending on a multiple-access scheme. For example, when SC-FDMA is in use as an uplink multi-access scheme, the OFDM symbols may be called SC-FDMA symbols. A resource block (RB), a resource allocation unit, includes a plurality of continuous subcarriers in a slot. The structure of the radio frame is merely an example. Namely, the number of subframes included in a radio frame, the number of slots included in a subframe, or the number of OFDM symbols included in a slot may vary.

3GPP LTE defines that one slot includes seven OFDM symbols in a normal cyclic prefix (CP) and one slot includes six OFDM symbols in an extended CP.

The wireless communication system may be divided into a frequency division duplex (FDD) scheme and a time division duplex (TDD) scheme. According to the FDD scheme, an uplink transmission and a downlink transmission are made at different frequency bands. According to the TDD scheme, an uplink transmission and a downlink transmission are made during different periods of time at the same frequency band. A channel response of the TDD scheme is substantially reciprocal. This means that a downlink channel response and an uplink channel response are almost the same in a given frequency band. Thus, the TDD-based wireless communication system is advantageous in that the downlink channel response can be obtained from the uplink channel response. In the TDD scheme, the entire frequency band is time-divided for uplink and downlink transmissions, so a downlink transmission by the BS and an uplink transmission by the UE can be simultaneously performed. In a TDD system in which an uplink transmission and a downlink transmission are discriminated in units of subframes, the uplink transmission and the downlink transmission are performed in different subframes.

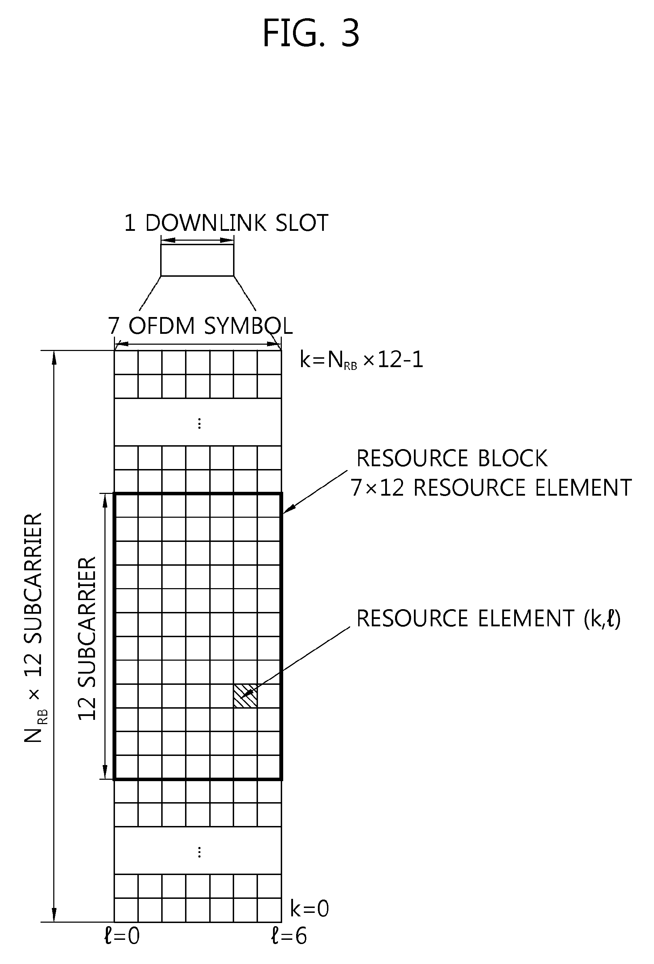

FIG. 3 shows an example of a resource grid of a single downlink slot.

A downlink slot includes a plurality of OFDM symbols in the time domain and $N_{RB}$ number of resource blocks (RBs) in the frequency domain. The $N_{RB}$ number of resource blocks included in the downlink slot is dependent upon a downlink transmission bandwidth set in a cell. For example, in an LTE system, $N_{RB}$ may be any one of 60 to 110. One resource block includes a plurality of subcarriers in the frequency domain. An uplink slot may have the same structure as that of the downlink slot.

Each element on the resource grid is called a resource element. The resource elements on the resource grid can be discriminated by a pair of indexes (k,1) in the slot. Here, k (k=0,...,$N_{RB}\times 12-1$) is a subcarrier index in the frequency domain, and 1 is an OFDM symbol index in the time domain.

Here, it is illustrated that one resource block includes 7x12 resource elements made up of seven OFDM symbols in the time domain and twelve subcarriers in the frequency domain, but the number of OFDM symbols and the number of subcarriers in the resource block are not limited thereto. The number of OFDM symbols and the number of subcarriers may vary depending on the length of a cyclic prefix (CP), frequency spacing, and the like. For example, in case of a normal CP, the number of OFDM symbols is 7, and in case of an extended CP, the number of OFDM symbols is 6. One of 128, 256, 512, 1024, 1536, and 2048 may be selectively used as the number of subcarriers in one OFDM symbol.

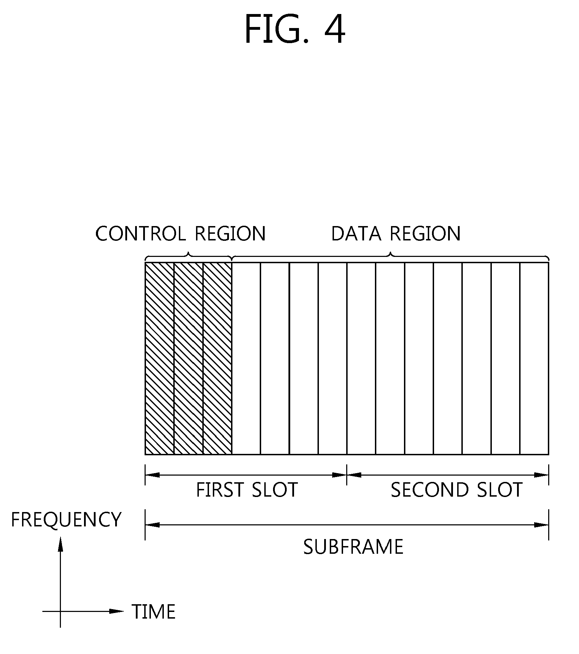

FIG. 4 shows the structure of a downlink subframe.

A downlink subframe includes two slots in the time domain, and each of the slots includes seven OFDM symbols in the normal CP. First three OFDM symbols (maximum four OFDM symbols with respect to a 1.4 MHz bandwidth) of a first slot in the subframe corresponds to a control region to which control channels are allocated, and the other remaining OFDM symbols correspond to a data region to which a physical downlink shared channel (PDSCH) is allocated.

The PDCCH may carry a transmission format and a resource allocation of a downlink shared channel (DL-SCH), resource allocation information of an uplink shared channel (UL-SCH), paging information on a PCH, system information on a DL-SCH, a resource allocation of an higher layer control message such as a random access response transmitted via a PDSCH, a set of transmission power control commands with respect to individual UEs in a certain UE group, an activation of a voice over internet protocol (VoIP), and the like. A plurality of PDCCHs may be transmitted in the control region, and a UE can monitor a plurality ofPDCCHs. The PDCCHs are transmitted on one or an aggregation of a plurality of consecutive control channel elements (CCE). The CCE is a logical allocation unit used to provide a coding rate according to the state of a wireless channel. The CCE corresponds to 9 resource element groups (REG) including respectively 4 resource elements. 4 quadrature phase shift keying (QPSK) symbols are mapped to each REG. Resource elements occupied by reference signals (RS) are not included in the REG, and the total number of REGs within a given OFDM symbol may be determined according to whether a cell-specific RS (CRS) exists. The format of the PDCCH and the number of bits of the possible PDCCH are determined according to the correlation between the number CCEs and the coding rate provided by the CCEs. The number of CCEs used for transmission of a specific PDCCH may be determined by the base station according to the channel situation. For example, the PDCCH for the UE having a superior channel state may use only one CCE. The PDCCH for the UE having an inferior channel state may need 8 CCEs in order to obtain sufficient robustness. Furthermore, the transmission power of the PDCCH may be adjusted according to the channel state.

The BS determines a PDCCH format according to a DCI to be transmitted to the UE, and attaches a cyclic redundancy check (CRC) to the DCI. A unique radio network temporary identifier (RNTI) is masked on the CRC according to the owner or the purpose of the PDCCH. In case of a PDCCH for a particular UE, a unique identifier, e.g., a cell-RNTI (C-RNTI), of the UE, may be masked on the CRC. Or, in case of a PDCCH for a paging message, a paging indication identifier, e.g., a paging-RNTI (P-RNTI), may be masked on the CRC. In case of a PDCCH for a system information block (SIB), a system information identifier, e.g., a system information-RNTI (SI-RNTI), may be masked on the CRC. In order to indicate a random access response, i.e., a response to a transmission of a random access preamble of the UE, a random access-RNTI (RA-RNTI) may be masked on the CRC.

A restrictive set at the CCE position where the PDCCH may be located may be defined for each UE. The set of the CCE position where the PDCCH of each UE itself may be found is called a search space. The size of the search space is different according to the format of the PDCCH. The search space may be divided into a common search space (CSS) and a UE-specific search space (USS). The CSS is an area where the PDCCH which carries common control information is searched, and is a search area which is commonly configured for all UEs. The CSS is compose of 16 CCEs of CCE indexes 0 to 15, and may support the PDCCH of aggregation levels 4 and 8. However, the DCI format 0/1A which carries UE-specific control information may be transmitted through the CSS. The USS is a dedicated search space for a specific UE. The USS may support the PDCCH of aggregation levels 1, 2, 4, and 8. For one UE, the CSS may overlap with the USS. Table 1 shows the aggregation level which is defined in the search area.

Table 1

| Search space $S_k^{(L)}$ | | | Number of PDCCH candidates $M^{(L)}$ |
|---|---|---|---|
| Type | Aggregation level L | Size [in CCEs] | |
| USS | 1 | 6 | 6 |
| | 2 | 12 | 6 |
| | 4 | 8 | 2 |
| | 8 | 16 | 2 |

(continued)

| Search space $S_k^{(L)}$ | | | Number of PDCCH candidates $M^{(L)}$ |
|---|---|---|---|
| Type | Aggregation level L | Size [in CCEs] | |
| CSS | 4 | 16 | 4 |
| | 8 | 16 | 2 |

The UE blind-decodes a DCI format which is transmitted from the base station. The blind decoding is a scheme of determining whether the PDCCH is the UE's own control channel by checking a CRC error by demasking a desired identifier to the CRC of the received PDCCH. The UE does not know the position where the UE's PDCCH is transmitted within the control region, and the CCE aggregation level or DCI format which is used for the transmission. In order to reduce a calculation burden of the UE's blind decoding, the UE does not need to simultaneously search for all defined DCI formats. Generally, the UE may always search for the DCI format 0/1A in the USS. The DCI format 0 is used for the scheduling of the physical uplink shared channel (PUSCH). The DCI format 1A is used for the scheduling of the PDSCH and for the random access procedure which is initialized by the order of the PDCCH. The DCI format 0/1A may have the same size, and may be distinguished by a flag within the DCI format. Furthermore, the UE may be requested to further receive the DCI format 1/1B/2, etc, in the USS according to the PDSCH transmission mode which is configured by the base station. The UE may search form the DCI format 1A/1C in the CSS. Furthermore, the UE may be configured to search for the DCI format 3/3A, etc, in the CSS. The DCI format 3/3A has the same size as that of the DCI format 0/1A and may be distinguished by having a CRC which has been scrambled by the different identifiers. The UE may perform blind decoding up to 44 times within the subframe according to the transmission mode and the DCI format.

The control region of each serving cell is composed of a set of CCEs whose indexes are 0 to $N_{CCE,K}-1$, and $N_{CCE,k}$ is the total number of CCEs within the control region of subframe k. The UE may monitor the PDCCH candidate set as configured by the higher layer on one or more activated serving cells. At this time, the monitoring is an attempt of respectively decoding the PDCCH within the PDCCH candidate set according to all monitored DCI formats. Search space $S_k^{(L)}$ in aggregation levels 1, 2, 4, or 8 may be defined by the PDCCH candidate set. In each serving cell where the PDCCH is monitored, the CCE corresponding to the PDCCH candidate m of the search space $S_k^{(L)}$ may be determined by Equation 1 below.

[Equation 1]

$$L\left\{ (Y_k + m') \bmod \left\lfloor N_{CCE,k} / L \right\rfloor \right\} + i$$

Here, i=0,1,...,L-1, m=0,...,$M^{(L)}$-1. $M^{(L)}$ is the number of PDCCH candidates which are monitored in a given search space. If the carrier indicator field (CIF) is set to the UE in the USS, m'=m+$M^{(L)}n_{CI}$. $n_{CI}$ is the value of CIF. If the CIF is not set to the UE, m'=m. In the CSS, if aggregation level is 4 or 8, $Y_k$ is set to 0. In the USS $S_k^{(L)}$, if the aggregation level is L, $Y_k$ is determined by equation 2.

[Equation 2]

$$Y_k = \left( A \cdot Y_{k-1} \right) \bmod D$$

Here, Y-1=$n_{RNTI}\neq0$, A=39827, D=65537, k=floor($n_s$/2), and $n_s$ is the slot number within a wireless frame.

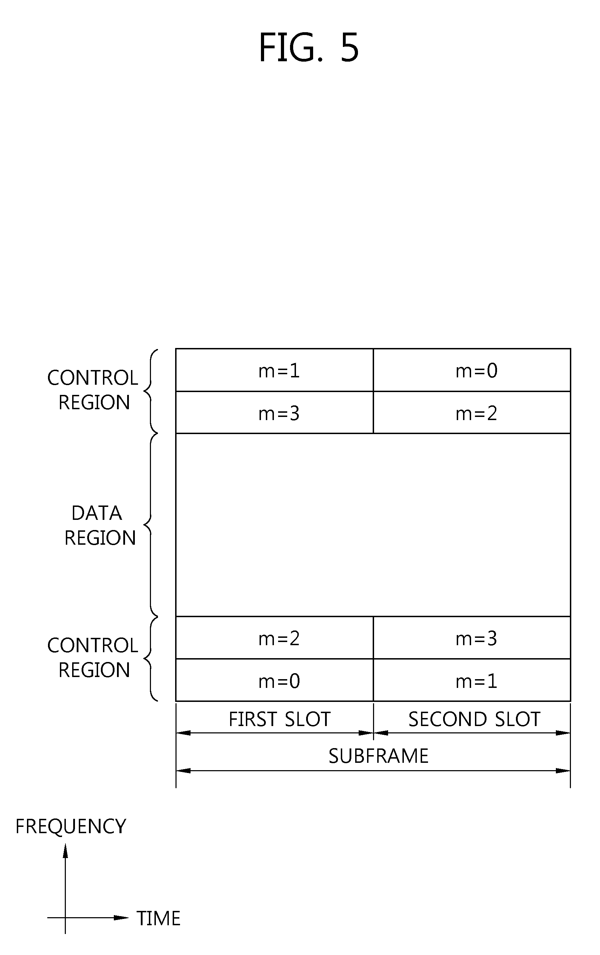

FIG. 5 shows the structure of an uplink subframe.

An uplink subframe may be divided into a control region and a data region in the frequency domain. A physical uplink control channel (PUCCH) for transmitting uplink control information is allocated to the control region. A physical uplink shared channel (PUCCH) for transmitting data is allocated to the data region. When indicated by a higher layer, the UE may support a simultaneous transmission of the PUSCH and the PUCCH.

The PUCCH with respect to a UE is allocated by a pair of resource blocks in a subframe. The resource blocks belonging to the pair of resource blocks (RBs) occupy different subcarriers in first and second slots, respectively. The frequency occupied by the RBs belonging to the pair of RBs is changed based on a slot boundary. This is said that the pair of RBs allocated to the PUCCH is frequency-hopped at the slot boundary. The UE can obtain a frequency diversity gain by transmitting uplink control information through different subcarriers according to time. In FIG. 5, m is a position index indicating the logical frequency domain positions of the pair of RBs allocated to the PUCCH in the subframe.

Uplink control information transmitted on the PUCCH may include a hybrid automatic repeat request (HARQ) acknowledgement/non-acknowledgement (ACK/NACK), a channel quality indicator (CQI) indicating the state of a downlink channel, a scheduling request (SR), and the like.

The PUSCH is mapped to an uplink shared channel (UL-SCH), a transport channel. Uplink data transmitted on the PUSCH may be a transport block, a data block for the UL-SCH transmitted during the TTI. The transport block may be user information. Or, the uplink data may be multiplexed data. The multiplexed data may be data obtained by multiplexing the transport block for the UL-SCH and control information. For example, control information multiplexed to data may include a CQI, a precoding matrix indicator (PMI), an HARQ, a rank indicator (RI), or the like. Or the uplink data may include only control information.

In 3GPP LTE-A, a carrier aggregation (CA) which supports a plurality of cells may be applied. A plurality of base stations and UEs may communicate through up to 5 cells. The 5 cells may correspond to the bandwidth of the maximum 100MHz. That is, the CA environment indicates a case where a specific UE has two or more configured serving cells (hereinafter, referred to as "cell") having different carrier frequencies. The carrier frequency represents the center frequency of a cell.

A cell shows combination of DL resources and optionally UL resources. That is, the cell certainly includes DL resources, and the UL resources combined with the DL resources may be optionally included. The DL resources may be a DL component carrier (CC). The UL resources may be a UL CC. When a specific UE includes one configured serving cell, the UE may include one DL CC and one UL CC. When a specific UE includes two or more cells, the UE may include DL CCs whose number is the same as the number of cells and UL CCs whose number is the same as or smaller than the number of cells. That is, when CA is supported in the current 3GPP LTE-A, the number of DL CCs may always be the same as or greater than the number ofUL CCs. However, in the release after 3GPP LTE-A, a CA where the number of DL CCs is smaller than the number of UL CCs may be supported.

The linkage between the carrier frequency of the DL CC and the carrier frequency of the UL CC may be indicated by system information transmitted on the DL CC. The system information may be a system information block type 2 (SIB2).

The UE which supports the CA may use a primary cell (PCell) and one or more secondary cells (SCell) for an increased bandwidth. That is, when there are two or more cells, one cell becomes a PCell, and the other cells become SCells. Both the PCell and the SCell may become a serving cell. The UE in the RRC_CONNECTED state where the CA is not supported or cannot be supported may have only one serving cell including only the PCell. The UE in the RRC_CONNECTED state which supports the CA may have one or more serving cells including the PCell and all SCells. Meanwhile, in the TDD system, the UL-DL configuration of all cells may be the same.

The PCell may be a cell which operates in a primary frequency. The PCell may be a cell where the UE performs radio resource control (RRC) connection with a network. The PCell may be a cell whose cell index is the smallest. The PCell may be a cell which tries a random access through a physical random access channel (PRACH) firstly among a plurality of cells. The PCell may be a cell where the UE performs an initial connection establishment process or a connection reestablishment process in a CA environment. Furthermore, the PCell may be a cell which is indicated in a handover process. The UE may obtain non-access stratum (NAS) mobility information (e.g., a tracking area indicator (TAI)) at the time of a RRC connection/reestablishment/handover through the PCell. Furthermore, the UE may obtain a security input at the time of RRC reestablishment/handover through the PCell. The UE may be allocated and transmit a PUCCH only in the PCell. Furthermore, the UE may apply system information acquisition and system information change monitoring only for the PCell. The network may change the PCell of the UE which supports the CA in the handover process by using RRCConnectionReconfiguration messge including MobilityControlInfo.

The SCell may be a cell which operates in a secondary frequency. The SCell is used to provide additional wireless resources. The PUCCH is not allocated to the SCell. When adding the SCell, the network provides all system information related with the operation of the related cell in the RRC_CONNECED state to the UE through dedicated signaling. The change of the system information for the SCell may be performed by a release and addition of the related cell, and the network may independently add, remove, or change the SCell through a RRC connection reestablishment process which uses RRCConnectionReconfiguration message.

The LTE-A UE which supports the CA may simultaneously transmit or receive one or a plurality of CCs depending on the capacity. The LTE rel-8 UE may transmit or receive only one CC when each CC is compatible with the LTE rel-8 system. Hence, when the number of CCs used in the UL is the same as the number of CCs used in the DL, all CCs need to be configured to be compatible with the LTE rel-8. Furthermore, in order to efficiently use a plurality of CCs, a plurality of CCs may be managed in a media access control (MAC). When the CA is formed in the DL, the receiver in the UE should be able to receive a plurality of DL CCs, and when the CA is formed in the UL, the transmitter in the UE should be able to transmit a plurality of UL CCs.

Furthermore, in the LTE-A system, a backward compatible carrier and a non-backward compatible carrier may exist. The backward compatible carrier is a carrier which can be connected to the UE of all LTE releases including LTE rel-8 and LTE-A. The backward compatible carrier may operate as a single carrier or a CC that forms a CA. The backward compatible carrier may be formed always as a pair of DL and UL in a FDD system. In contrast, the non-backward compatible carrier cannot be connected to the UE of the previous LTE release, and may be connected only to the UE of or after the LTE release that defines the carrier. For example, there may be a carrier which can be connected only to a UE of LTE rel-11 and cannot be connected to the UEs of LTE rel-8 to LTE rel-10. The non-backward compatible carrier may operate as a single carrier or as a CC which forms a CA as in the backward compatible carrier.

The extension carrier is a carrier which cannot operate as a single carrier. However, the extension carrier needs to be a CC which forms a CA including at least one carrier which can operate as a single carrier. Hereinafter, the non-backward compatible carrier is referred to as an extension carrier for the convenience of explanation. Generally, in LTE rel-8/9/10, the DL CC and the UL CC in the cell have a SIB2 linkage. For example, if an UL grant is transmitted through a PDCCH which is allocated to the DL CC, the PUSCH is allocated to the UL CC which has a SIB2 linkage with the DL CC. Furthermore, the control channel in the DL and the UL may be performed based on the CC which has a SIB2 linkage. However, if the DL/UL extension carrier is defined, the DL/UL extension carrier does not have a UL/DL CC which has a SIB2 linkage.

As a CA environment is introduced, cross carrier scheduling may be applied. Through the cross carrier scheduling, the PDCCH on a specific DL CC may schedule the PDSCH on one DL CC among a plurality of DL CCs or schedule the PUSCH on one UL CC among a plurality of UL CCs. A carrier indicator field (CIF) may be defined for the cross carrier scheduling. The CIF may be included in the DCI format which is transmitted on the PDCCH. Whether the CIF exists within the DCI format may be indicated by the higher layer semi-statically or UE-specifically. When the cross carrier scheduling is performed, the CIF may indicate the DL CC where the PDSCH is scheduled or the UL CC where the PUSCH is scheduled. The CIF may be fixed three bits, and may exist in a fixed position regardless of the DCI format size. When the CIF does not exist within the DCI format, the PDCCH on a specific DL CC may schedule the PDSCH on the same DL CC or schedule the PUSCH on the UL CC which has a SIB2 linkage with the specific DL CC.

When the cross carrier scheduling is performed using the CIF, the base station may allocate the PDCCH monitoring DL CC aggregation in order to reduce complexity of the blind decoding of the UE. The PDCCH monitoring DL CC aggregation is a part of the whole DL CC, and the UE performs blind decoding only for the PDCCH within the PDCCH monitoring DL CC aggregation. That is, in order to schedule the PDSCH and/or PUSCH for the UE, the base station may transmit the PDCCH only through the DL CC in the PDCCH monitoring DL CC aggregation. The PDCCH monitoring DL CC aggregation may be set UE-specifically, UE-group-specifically or cell-specifically.

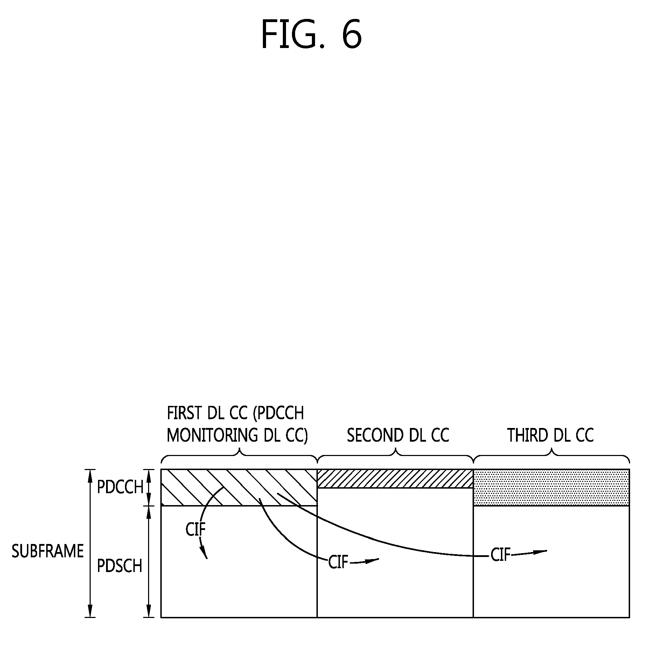

FIG. 6 shows an example of a subframe structure of 3GPP LTE-A system which is cross-carrier-scheduled through CIF.

Referring to FIG. 6, a first DL CC among three DL CCs is set as a PDCCH monitoring DL CC. When the cross carrier scheduling is not performed, each DL CC schedules PDSCH by transmitting each PDCCH. When the cross carrier scheduling is performed, only the first DL CC which is set as the PDCCH monitoring DL CC transmits the PDCCH. The PDCCH which is transmitted on the first DL CC schedules the PDSCH of the second DL CC and the third DL CC by using CIF as well as the PDSCH of the first DL CC. The second DL CC and the third DL CC which are not set as the PDCCH monitoring DL CC do not transmit PDCCH.

Furthermore, the cross carrier scheduling is not supported in the PCell. That is, the PCell is always scheduled by its own PDCCH. The UL grant and DL assignment of the cell is always scheduled from the same cell. That is, if the DL in the cell is scheduled on the second carrier, the UL is also scheduled on the second carrier. The PDCCH order may be transmitted only on the PCell. Furthermore, frame timing, a super frame number (SFN) timing, etc. may be aligned in the aggregated cells.

The UE may monitor one CSS when the aggregation level is 4 or 8 on the PCell. The UE where the CIF has not been set monitors one USS when the aggregation level is one of 1, 2, 4, and 8 in each activated serving cell. As configured by the higher layer, the CIF-set UE monitors one or more USSs when the aggregation level is one of 1, 2, 4, and 8 on one or more activated serving cells. The CSS may overlap with the USS on the PCell.

The CIF-set UE associated with the PDCCH which is monitored in the serving cell of the serving cell and monitors the PDCCH including the CRC, which is scrambled by the C-RNTI and configured as the CIF, in the USS. The CIF-set UE associated with the PDCCH which is monitored in the PCell monitors the PDCCH including the CRC, which is scrambled by the SPS C-RNTI and configured as the CIF, in the USS of the PCell. Furthermore, the UE may monitor the PDCCH by searching the CSS without the CIF. For the serving cell on which the PDCCH is monitored, the UE in which the CIF has not been set monitors the USS without CIF for the PDCCH. The CIF-set UE monitors the USS through the CIF for the PDCCH. When configured to monitor the PDCCH in the SCell through the CIF in another serving cell, the UE may not monitor the PDCCH of the SCell.

Furthermore, the UE may transmit uplink control information such as an

ACK/NACK signal and channel state information (CSI) which are received, detected, or measured from one or more DL CCs, to the base station through one predetermined UL CC. For example, when the UE needs to transmit an ACK/NACK signal for data which is received from DL CCs of PCell and SCells, the UE may transmit a plurality of ACK/NACK signals for the data received from each DL CC to the base station through the PUCCH of the UL CC of the PCell by multiplexing or bundling the ACK/NACK signals.

When supporting the CA, the intra-band CA and the inter-band CA may be considered. Generally, the intra-band CA is first considered. At this time, the band refers to an operating bandwidth, and is defined as a frequency range where the system operates. Table 1 represents an example of an operating bandwidth which is used in 3GPP LTE. Table 5.5-1 of 3GPP TS 36.104 V10.0.0 may be referenced.

[Table 1]

| E-UTRA Operating bandwidth | UL operating bandwidth $F_{UL\_low}$ - $F_{UL\_high}$ | DL operating bandwidth $F_{DL\_low}$ - $F_{DL\_high}$ | Duplex mode |
|---|---|---|---|
| 1 | 1920 MHz - 1980 MHz | 2110 MHz - 2170 MHz | FDD |
| 2 | 1850 MHz - 1910 MHz | 1930 MHz - 1990 MHz | FDD |
| 3 | 1710 MHz - 1785 MHz | 1805 MHz - 1880 MHz | FDD |
| 4 | 1710 MHz - 1755 MHz | 2110 MHz - 2155 MHz | FDD |
| 5 | 824 MHz - 849 MHz | 869 MHz - 894MHz | FDD |
| 6 | 830 MHz - 840 MHz | 875 MHz - 885 MHz | FDD |
| 7 | 2500 MHz - 2570 MHz | 2620 MHz - 2690 MHz | FDD |
| 8 | 880 MHz - 915 MHz | 925 MHz - 960 MHz | FDD |
| 9 | 1749.9 MHz - 1784.9 MHz | 1844.9 MHz - 1879.9 MHz | FDD |
| 10 | 1710 MHz - 1770 MHz | 2110 MHz - 2170 MHz | FDD |
| 11 | 1427.9 MHz - 1447.9 MHz | 1475.9 MHz - 1495.9 MHz | FDD |
| 12 | 698 MHz - 716 MHz | 728 MHz - 746 MHz | FDD |
| 13 | 777 MHz - 787 MHz | 746 MHz - 756 MHz | FDD |
| 14 | 788 MHz - 798 MHz | 758 MHz - 768 MHz | FDD |
| 15 | Reserved | Reserved | FDD |
| 16 | Reserved | Reserved | FDD |
| 17 | 704 MHz - 716 MHz | 734 MHz - 746 MHz | FDD |
| 18 | 815 MHz - 830 MHz | 860 MHz - 875 MHz | FDD |
| 19 | 830 MHz - 845 MHz | 875 MHz - 890 MHz | FDD |
| 20 | 832 MHz - 862 MHz | 791 MHz - 821 MHz | |
| 21 | 1447.9 MHz - 1462.9 MHz | 1495.9 MHz - 1510.9 MHz | FDD |
| ... | | | |
| 33 | 1900 MHz - 1920 MHz | 1900 MHz - 1920 MHz | TDD |
| 34 | 2010 MHz - 2025 MHz | 2010 MHz - 2025 MHz | TDD |
| 35 | 1850 MHz - 1910 MHz | 1850 MHz - 1910 MHz | TDD |
| 36 | 1930 MHz - 1990 MHz | 1930 MHz - 1990 MHz | TDD |
| 37 | 1910 MHz - 1930 MHz | 1910 MHz - 1930 MHz | TDD |
| 38 | 2570 MHz - 2620 MHz | 2570 MHz - 2620 MHz | TDD |
| 39 | 1880 MHz - 1920 MHz | 1880 MHz - 1920 MHz | TDD |
| 40 | 2300 MHz - 2400 MHz | 2300 MHz - 2400 MHz | TDD |
| 41 | 2496 MHz - 2690 MHz | 2496 MHz - 2690 MHz | TDD |

A plurality of DL CCs or UL CCs which form the CA environment in the intra-band CA are placed adjacent to the frequency domain. That is, the plurality of DL CCs or UL CCs which form the CA environment may be positioned within the same operating bandwidth. Hence, each cell in the intra-band CA may be formed under a premise that respective cells have similar electric wave characteristics. At this time, the electric wave characteristics may include a propagation/path delay, a propagation/path loss, and fading channel impact which may be changed according to the frequency or central frequency. A plurality of CCs are positioned within the same operating bandwidth, and thus the UE may obtain the UL transmission timing for the UL CC in the PCell and set the UL transmission timing of the UL CCs in the SCells to be the same as the transmission timing of the obtained PCell. As such, the UL subframe boundary between cells is aligned in the UE in the same manner, and the UE may communicate with the base station in the CA environment through one radio frequency (RF). However, the PRACH transmission timing may be different for each cell.

A plurality of DL CCs or UL CCs which form the CA environment in the inter-band CA may not be positioned adjacent to the frequency domain. A plurality of CCs which form the CA environment may not be positioned adjacent to the frequency domain due to the allocation of remaining frequencies and the reuse of the frequencies which have been used as another usage, etc. For example, when 2 cells form a CA environment, the carrier frequency of one cell is 800 MHz in DL and UL, and the carrier frequency of the other cell may be 2.5 GHz in DL and UL. Furthermore, the carrier frequency of one cell may be 700 MHz in DL and UL, and the carrier frequency of one cell may be 2.1 GHz in DL and 1.7 GHz in UL. In such an inter-band CA environment, it cannot be assumed that electric wave characteristics between respective cells are the same. That is, in the inter-band CA environment, the UL subframe boundaries between cells cannot be aligned in the same manner, and different UL transmission timings may need to be obtained between cells. The UE may communicate with the base station through a plurality of RFs in the inter-band CA environment.

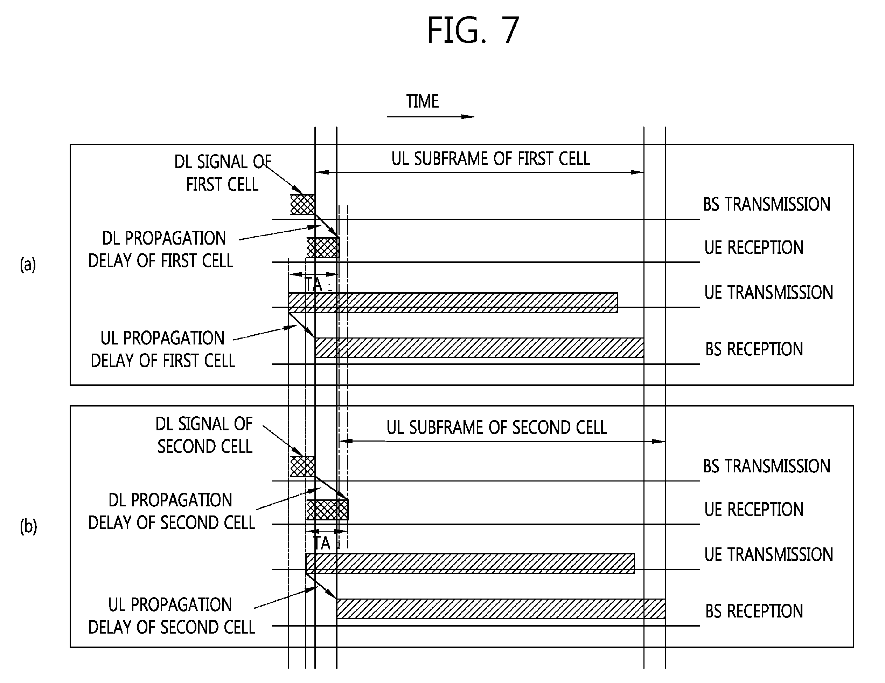

FIG. 7 shows an example where two cells have different UL transmission timings in a CA environment.

FIG. 7-(a) shows the UL transmission timing of the first cell, and FIG. 7-(b) shows the UL transmission timing of the second cell. Referring to FIG. 7, the base station transmits the DL signal at the same time point through the first cell and the second cell. The UE receives the DL signal through the first cell and the second cell. At this time, the DL propagation delay of the second cell is greater than the DL propagation delay of the first cell. That is, the DL signal through the second cell is more lately received than the DL signal through the first cell. Respective cells may have different timing advance (TA) values. In FIG. 7, the TA value of the first cell is $TA_1$, and the TA value of the second cell is $TA_2$. Respective cells may have different UL transmission timings. The UL subframe of the first cell and the UL subframe of the second cell are not aligned each other. Each cell needs to perform UL transmission based on different TA values. The current 3GPP LTE-A does not support different UL transmission timings between cells. Furthermore, the UL propagation delay of the second cell is greater than the UL propagation delay of the first cell. It was assumed in FIG. 7 that both DL and UL propagation delays of the second cell are greater than the DL and UL propagation delays of the first cell for the convenience of description, but this is merely an example, and the DL propagation delay may not be proportional to the UL propagation delay.

Hereinafter, a method of efficiently obtaining a plurality of UL transmission timings when the CA is supported is described. The method of obtaining a plurality of UL transmission timings described below may be applied regardless of the UL access scheme. It is assumed below that the UL access scheme is SC-FDMA, but the method may also be applied to the case when the UL access scheme is OFDMA.

1) When a specific SCell has been added by the base station, the random access process for the SCell of the UE may be initialized. That is, if a specific SCell is added, the UE may obtain the UL transmission timing of the SCell.

2) Alternatively, when a specific SCell is activated by the base station, the random access process for the SCell of the UE may be initialized. Even if the SCell is added, the SCell may not be activated and may not be actually used. It is not efficient to obtain and maintain UL transmission timings of such SCell. Hence, the UE may obtain the UL transmission timing of the SCell when a specific SCell is added and activated.

3) Alternatively, the random access process for the SCell of the UE may be initialized by the order of the base station. The base station may order the UE to perform the random access process for the SCell after the SCell is added or the SCell is activated. However, the time point when the base station orders the UE to perform the random access process is not limited thereto. In the description below, for the convenience of description, it is assumed that the base station orders the UE to perform the random access process after the SCell is activated. For example, the order of the base station may be the PDCCH order.

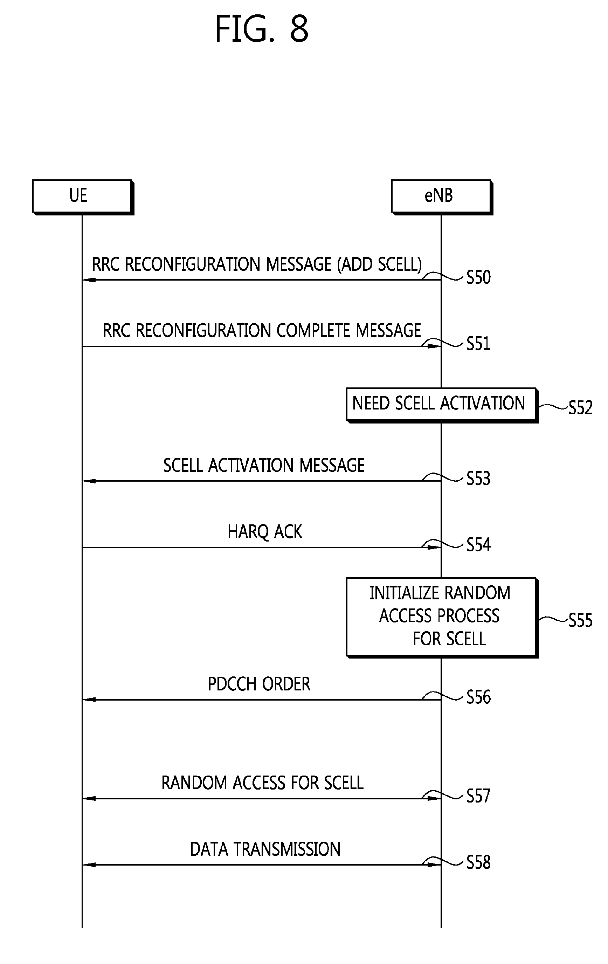

FIG. 8 shows an example of initializing a random access process for a SCell of a UE by an order of a base station.

Referring to FIG. 8, in step S50, the base station transmits an RRC reconfiguration message to the UE. The SCell may be added by the RRC reconfiguration message. In step S51, the UE transmits the RRC reconfiguration complete message to the base station as a response to the RRC reconfiguration message. In step S52, the base station needs activation of the added SCell. In step S53, the base station transmits a SCell activation message to the UE. In step S54, the UE transmits a HARQ ACK message for the SCell activation message. In step S55, the base station initializes the random access process for the SCell. In step S56, the base station transmits the PDCCH order to the UE. In step S57, the random access process for the SCell between the UE and the base station is performed. In step S58, the UE adjusts the UL transmission timing and transmits data to the base station after completing the random access process.

Meanwhile, in the above description, the SCell may be extended to the extension carrier. That is, in the above description, the SCell may be replaced with an UL extension carrier. When a specific UL extension carrier is added, when the added specific UL extension carrier is activated or by the order of the base station, the random access process for the UL extension carrier of the UE may be initialized. When the random access process for the UL extension carrier of the UE is initialized by the order of the base station, the base station may notify the UE to initialize the random access process in various methods. For example, the base station may notify the UE to initialize the random access process through a specific field within the RRC message used when adding the UL extension carrier or through a separate RRC message. Furthermore, the base station may notify the UE to initialize the random access process through a specific field within the MAC message used when activating the added UL extension carrier or a separate MAC message. Furthermore, whether to cross-carrier-schedule the UL extension carrier may be ordered by the higher layer, or the system may be configured so that the cross carrier scheduling may be always performed without an explicit order.

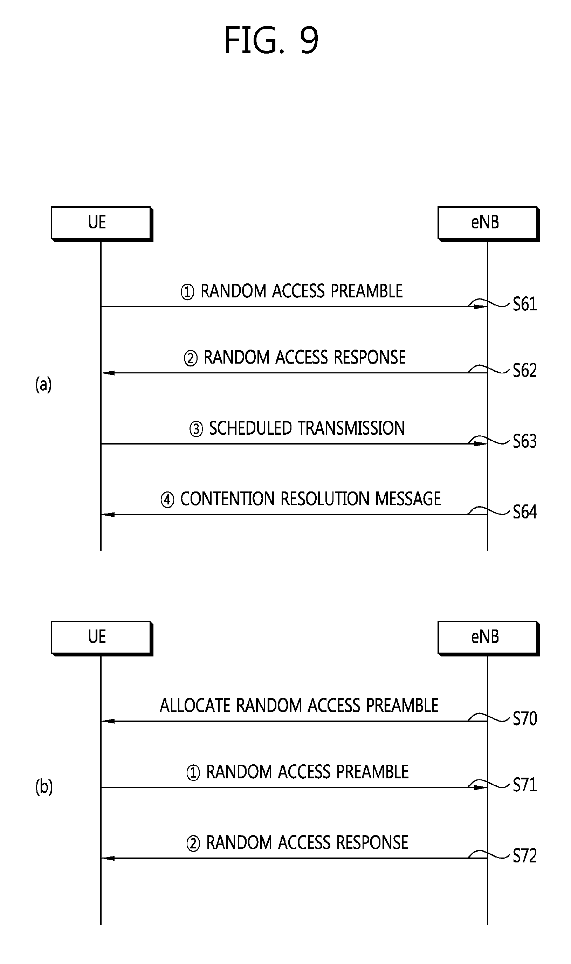

FIG. 9 shows an example of a general random access process.

The random access process may be divided into a content-based random access process and a non-contention based random access process. The above-described random access process for the SCell may be performed through one or more predetermined methods among two random access processes.

FIG. 9-(a) shows a contention-based random access process. In step S61, the UE transmits a random access preamble to the base station. The random access preamble may be referred to as a PRACH preamble. Furthermore, the random access preamble may be called a first message in the random access process. In step S62, the base station transmits a random access response to the UE as a response to the random access preamble. The random access preamble may be referred to as a RACH response. The random access response may be called a second message in the random access process. In step S63, the UE performs the scheduled transmission to the base station. The scheduled transmission may be called a third message in the random access process. In step S64, the base station transmits the contention resolution message to the UE. The contention resolution message may be called a fourth message in the random access process.

FIG. 9-(b) shows a non-contention based random access process. In step S70, the base station allocates a random access preamble to the UE. In step S71, the UE transmits a first message to the base station. In step S72, the base station transmits a second message to the UE as a response to the first message.

Hereinafter, the method of supporting a cross-carrier scheduling in a random access procedure for an SCell according to the present invention is described.

In LTE-Arel-10, whether the cross-carrier scheduling is supported in each cell may be ordered by CrossCarrierSchedulingConfig which is an RRC parameter. The UE monitors the PDCCH in the CSS and the USS within the cell. In LTE rel-8/9, the UE may perform blind decoding up to 12 times in the CSS, and may perform blind decoding up to 32 times in the USS. In the LTE-Arel-10 UE, the CSS may also perform blind decoding as in the LTE rel-8/9 UE.

The CSS does not exist in the SCell. If a cross carrier scheduling is not configured in the SCell, the UE may blind-decode the PDCCH in the USS within the SCell. If the cross carrier scheduling is configured in the SCell, the PDCCH may be blind-decoded in the USS of the cell which is indicated by the cross carrier scheduling without blind-decoding the PDCCH within the SCell. The CIF within the DCI format which is transmitted through the PDCCH indicates information of the cell which is indicated by the cross carrier scheduling. The CIF is a field added to the existing DCI format, and thus the total length of each DCI format may increase. The DCI format without the CIF is used in the scheduling of the DL CC where the PDCCH is allocated or the scheduling of the UL CC which is SIB2-linked with the DL CC where the PDCCH is allocated. Meanwhile, the blind decoding for the SCell may be performed only in the SCell which has been added to the UE by the RRC, and which has been activated by the MAC.

Hereinafter, a method of applying a cross carrier scheduling for each message which is exchanged between the UE and the base station in a random access procedure is described. That is, the method of applying the cross carrier scheduling for the PDCCH order, which orders the UE to initiate the random access procedure, and messages 1 to 4 described in FIG. 9 is described. The contention-based random access procedure is illustrated below, but the present invention is not limited to the example, and the present invention may also be applied to a non-contention-based random access procedure.

First, the cross carrier scheduling of the PDCCH order is described.

    1) The PDCCH order, which orders initiation of the random access procedure for the SCell, may be transmitted from the base station always through the SCell. The UE in a state where the UL transmission timing for a specific SCell is not adjusted should monitor the PDCCH of the SCell regardless of whether the cross carrier scheduling is applied as the PDCCH order is transmitted through the SCell. However, the PDCCH load of the PCell and the SCell may be distributed. The PDCCH order for initiating the random access procedure in a specific cell group without the PCell may be transmitted always through the cell group. The PDCCH order may be transmitted through the DL CC which is SIB-linked with the UL CC where the random access procedure is performed.

2) The PDCCH order, which orders initiation of the random access procedure for the SCell, may be transmitted from the base station always through the PCell. When the PDCCH order is transmitted through the SCell, the UE needs to blind-decode the PDCCH of the SCell regardless of the existence of the PDCCH. In order to solve the problem, the PDCCH order, which orders initiation of the random access procedure for the SCell, may be transmitted through the PCell or a virtual PCell. At this time, the cell where the random access procedure is performed may be indicated by the base station through RRC, MAC, or PHY (physical) signaling. For example, the cell where the random access procedure is performed may be indicated using the CIF within the DCI format.

When a cell group is used, the PDCCH order for initiating the random access procedure within a specific cell group without including the PCell may be transmitted always through the cell group always including the PCell. The PDCCH may be transmitted through a predetermined specific cell within the cell group. The predetermined specific cell may be the PCell. As such, the PDCCH order, which orders initiation of the random access procedure for the SCell, may be transmitted from the base station always through the PCell. Furthermore, the PDCCH order for initiating the random access procedure in a specific cell group may be transmitted always through the cell group without including the PCell. The PDCCH may be transmitted through a predetermined virtual PCell within the cell group. The virtual PCell may be a cell whose cell index is the smallest within the cell group. When there is a cell which may transmit the PUCCH within the cell group, the cell may become a virtual PCell.

When the PDCCH order which initiates the random access procedure is transmitted through the PCell, the random access procedure which is initiated by the PDCCH order in the 3GPP LTE-A is performed through the DCI format 1A. The DCI format 1A may refer to Section 5.3.3.1.3 of 3GPP TS 36.212 V10.2.0 (2011-06). When the DCI format 1A is used for the random access procedure which is initiated by the PDCCH order, a specific field indicates information for the PRACH, and the remaining fields are filled with 0s. For example, when the DCI format 1A is used for the random access procedure which is initiated by the PDCCH order, the DCI format A may include such fields as the CIF, a DCI format 0/1A differentiation flag, a localized/distributed virtual RB (VRB) assignment flag, a resource block assignment, a preamble index, and a PRACH mask index, and such fields as a HARQ process number and a DL assignment index may be filled with 0s. At this time, the CIF may be included in the DCI format 1A only when the cross carrier scheduling is indicated by the higher layer and the DCI format 1A is transmitted in a USS. When the cross carrier scheduling is not performed or the DCI format 1A is transmitted through a CSS, the CIF is not included in the DCI format 1A.

The base station may indicate the cell where the random access procedure is performed to the UE through the DCI format 1A. When the DCI format 1A is used for the random access procedure which is initiated by the PDCCH order, the remaining bits such as the HARQ process number and the DL allocation index appears. The base station may notify the UE of the cell where the random access procedure is performed through the remaining bits. That is, the additional CIF information may be defined within the DCI format 1A without an increase of the DCI format length, which is referred to as a second CIF below. The CIF which exists in the existing DCI format 1A may be referred to as a first CIF in a sense that it is distinguished from the second CIF. That is, the first CIF is a newly added field, increases the length of the existing DCI format, and may increase the number of times of the blind decoding because additional blind decoding is needed. In contrast, the second CIF is a field which substitutes the existing field, and maintains the length of the existing DCI format. Hence, the second CIF may maintain the number of times of the blind decoding because there is no change in the length of the DCI format. Since the PDCCH which initiates the random access procedure in the SCell is always transmitted in the PCell, the PCell always supports the cross carrier scheduling regardless of whether the SCell supports the cross carrier scheduling, and thus the second CIF is always included. When the PDCCH order is used to initiate the random access procedure of the PCell, the second CIF may not be used or may indicated the cell index of the PCell.

The existing legacy UE repeals the DCI format 1A including the second CIF, and the LTE-Arel-11 UE analyzes the second CIF to perform the cross carrier scheduling. When the cross carrier scheduling for the SCell is not configured, the first CIF does not exist within the DCI format 1A. When the second CIF exists, the UE which receives the PDCCH order initiates the random access procedure for the cell which is indicated by the second CIF. When the second CIF does not exist, the random access procedure for the UL CC which is SIB2-linked with the DL CC where the PDCCH order has been transmitted is initiated, which may be applied to both the USS and the CSS. As such, even when the cross carrier scheduling for the SCell is not applied, the cross carrier scheduling of the PDCCH order for initiating the random access procedure of a specific SCell may be supported.

When the cross carrier scheduling for the SCell is configured, the first CIF exists within the DCI format 1A which is transmitted from the USS of the PCell. Hence, when the cross carrier scheduling is configured, the DCI format 1A may be set not to include the second CIF. Furthermore, even when the cross carrier scheduling is configured, the DCI format 1A may include the second CIF, and the second CIF may be used in determining whether the first CIF is correct information. That is, the UE may determine that the received information is correct when the first CIF and the second CIF are the same. When the first CIF and the second CIF are different, the received PDCCH order may be repealed, knowing that the received information is wrong.

3) When the cross carrier scheduling for the SCell is configured, the PDCCH order which orders the initiation of the random access procedure for the SCell is transmitted from the cell where the cross carrier scheduling is configured, and the random access procedure may be performed in the cell which the CIF within the PDCCH order indicates. When the PDCCH order is transmitted always through the PCell, the PDCCH capability of the PCell may not be sufficient. When the PDCCH order is transmitted always through the SCell, there is a burden that the PDCCHs of the PCell and the SCell need to be simultaneously monitored. As such, the PDCCH order may also be allowed depending on whether the SCell supports the cross carrier scheduling.

When the cross carrier scheduling for the SCell is configured, the PDCCH order needs to include the first CIF. However, the first CIF may be included only when the PDCCH order is transmitted through the USS, and the first CIF may not be included when the PDCCH order is transmitted through the CSS. Hence, even when the PDCCH order is transmitted through the CSS, the PDCCH order may include the second CIF which is described above in order to support the cross carrier scheduling. Furthermore, the PDCCH order may always include the second CIF for commonality. Only, when the PDCCH order is used to initiate the random access procedure of its own cell, the second CIF may not be used. As such, the PDCCH order for initiating the random access procedure for a specific cell regardless of the type of a search space may be cross-carrier-scheduled.

When the cross carrier scheduling for the SCell is not configured, the PDCCH order may be transmitted through the PCell or the SCell as described above. The UE which receives the PDCCH order may initiate the random access procedure for the UL CC which is SIB2-linked with the DL CC where the PDCCH order has been transmitted.

Meanwhile, a dedicated preamble may be used in a non-contention based random access procedure. When the PDCCH order and the PRACH preamble are transmitted respectively at the DL CC and the UL CC which do not have the SIB linkage, a dedicated preamble may be used. For the dedicated preamble, the PDCCH order may include a preamble index. For example, in the PCell, preamble indexes 0 to 55 may be used as contention-based random accesses, and the preamble indexes 56 to 63 may be used as non-contention based random accesses. In the SCell, the preamble indexes 0 to 50 may be used as contention-based random accesses, and preamble indexes 51 to 63 may be used as non-contention based random accesses.

It is assumed that the UE transmits preamble index 51 to the base station for the random access of the SCell, and RACH response which is a response thereto is received through the PCell. Furthermore, it is assumed that the PRACH is allocated in the same time/frequency location in the PCell and the SCell. The preamble index 51 which has been transmitted by the UE may be arbitrarily used by another UE for the contention-based random access in the PCell. The UE calculates the RA-RNTI from the time/frequency location of the PRACH preamble which has been transmitted by the UE itself, and analyzes the PDCCH which is scrambled to the RA-RNTI among the PDCCHs as the PDCCH which has been transmitted to the UE itself. Hence, when the same RA-RNTI for the same time/frequency location is received, the UE cannot distinguish the response to the random access in the PCell from the response to the random access in the SCell. Hence, when the RACH response is received in a specific SCell through the PCell, the dedicated preamble which is used for a non-contention based random access may need to be ordered not to be used in the PCell. That is, some of the preamble indexes which are not used as non-contention based random accesses in the PCell may be ordered to be used only in the SCell.

The PRACH preamble used in the random access of the SCell may be used in the random access of the SCell. When a random access is requested in a plurality of SCells or a cell group, the SCell-dedicated preamble which may be transmitted in each SCell may be independently configured, and the configured dedicated preamble may be transmitted through the SCell even if cross-cell-triggered. By allocating a dedicated preamble for each UE and cell, when the RACH response is received in the PCell, it is possible to distinguish the cell, for which the response is, through the dedicated preamble without CIF.

Furthermore, the PRACH preamble used in the random access of the PCell may be used in the random access of the SCell. When a random access is requested in a plurality of SCells or a cell group, the PCell-dedicated preamble which may be transmitted in each SCell may be independently configured, the configured dedicated preamble may be transmitted through the SCell even if cross-cell-triggered. By allocating the dedicated preamble for each UE and cell, it is possible to distinguish the cell, for which the response is, through the dedicated preamble without CIF when the RACH response is received to the PCell. The PCell dedicated preamble has been allocated for the random access of the SCell, and thus even if the RACH response is transmitted through the PCell, the ambiguity between cells does not exist. However, the base station needs to control the preamble not to be redundantly used between cells.

In the above description, when a cell group is used, the cross carrier scheduling may be applied within the cell group or may be applied between cell groups.

For the random access for the SCell, the PRACH preamble needs to be transmitted always through the SCell.

Hereinafter, the cross carrier scheduling of the RACH response is described.

Generally, in the cross carrier scheduling, the CIF indicates the scheduled cell whose PDSCH/PUSCH scheduling is allocated by the PDCCH of the scheduling cell. Furthermore, in a case of cross-carrier scheduling in which the RACH response is transmitted from a cell other than a cell where the PRACH preamble is transmitted, the RACH response includes PUSCH allocation, and the RACH response may indicate the cell, for which cell the PUSCH is allocated. Additionally, another CIF for indicating the cell, from which the RACH response in the scheduled cell is a response to the PRACH preamble that has been transmitted, may be needed. Hereinafter, a method of defining an additional CIF for indicating the cell, from which the RACH response in the scheduled cell is a response to the PRACH preamble that has been transmitted from, is described. The CIF which is defined below is referred to as the second CIF which is distinguished from the CIF which is included in the existing RACH response. The CIF which may exist in the existing RACH response may be called a first CIF in a sense that it is distinguished from the second CIF.

1) The RACH response may be transmitted always through the PCell. To this end, the RACH response needs to include CIF for the PRACH preamble regardless of whether the SCell supports the cross carrier scheduling. The CIF for the PRACH preamble may indicate the cell which the RACH response is a response to the PRACH preamble of. As such, the UE which does not adjust the UL transmission timing for a specific cell may need to monitor only the PDCCH of the PCell regardless of whether the cross carrier scheduling is supported.

When a cell group is used, the RACH response in a specific cell group without including the PCell may be transmitted always through a cell group including the PCell. The RACH response may be transmitted through a predetermined specific cell within the cell group. The predetermined specific cell may be the PCell. As such, the RACH response may be transmitted from the base station always through the PCell. Furthermore, the RACH response in a specific cell group without including the PCell may be transmitted always through the cell group without including the PCell. The RACH response may be transmitted through a predetermined virtual PCell within the cell group. The virtual PCell may be a cell whose cell index is the smallest in the cell group. When there is a cell which may transmit the PUCCH within the cell group, the DL CC which is SIB2-linked with the UL CC which may transmit the PUCCH may be set as a virtual PCell. The cell group, which the RACH response is a response about, may be indicated from the base station by the MAC or PHY signaling. Furthermore, it is possible to distinguish the cell, which the RACH response is a response about, by differently configuring RA-RATI for each cell.

2) The RACH response may be transmitted always through the SCell. If the RACH response is transmitted through the PCell, the burden of the PCell increases. As such, the RACH response may be configured to be always transmitted through the SCell. The UE which does not adjust the UL transmission timing for a specific cell needs to monitor the PDCCHs of both the PCell and the SCell regardless of whether the cross carrier scheduling is supported. As such, the burden of the PCell and the SCell may be distributed. When a cell group is used, the RACH response in a specific cell group without including the PCell may be transmitted always through the cell group. The RACH response may be transmitted through the DL CC which has a SIB linkage with the UL CC where the random access procedure is performed.

As described above, confusion on the UE which expects the reception of the RACH response may be prevented by excluding the cross carrier scheduling of the RACH response. That is, the reception, by the legacy UE, of an incorrect RACH response by the cross carrier scheduling of the RACH response may be prevented. When the legacy UE which has performed a random access in a specific cell and the UE which has performed a random access in another cell expect to receive the RACH response in the same cell, the same RA-RNTI may be coincidently used, and the legacy UE may mistakenly consider the RA-RNTI as a RACH response to the legacy UE itself. Such a problem may be prevented by excluding the cross carrier scheduling of the RACH response.

3) When the cross carrier scheduling for the SCell is configured, the RACH response is transmitted to the cell where the cross carrier scheduling is configured, and the CIF including the message 2 may indicate the cell from where the PRACH preamble corresponding to the RACH response is transmitted. When the RACH response is transmitted always through the PCell, the PDCCH capability of the PCell may be insufficient. When the RACH response is transmitted always through the SCell, the PDCCHs of the PCell and the SCell need to be simultaneously monitored. As such, the RACH response may be followed as itself depending on whether SCell supports the cross carrier scheduling. The RACH response may include CIF indicating the cell which the UE uses in transmitting the PRACH preamble. When the cross carrier scheduling for the SCell is not configured, the RACH response may be transmitted through the PCell or the SCell as described above. Furthermore, when the cell group is used, the cross carrier scheduling may be applied within a cell group or between cell groups.

Hereinafter, the cross carrier scheduling message 3 of the random access procedure, i.e., the scheduled transmission is described.

1) Message 3 of the random access procedure may not support the cross carrier scheduling. That is, message 3 may be transmitted always through the UL CC which is SIB2-linked with the DL CC where the RACH response has been received.

2) When the cross carrier scheduling for the SCell is configured, the message 3 in the random access procedure may be transmitted from the cell which the CIF included in the message 3 indicates. The message 3 may also be followed as itself depending on the SCell supports the cross carrier scheduling. At this time, when indicating the UL grant in the RACH response, it is necessary to indicate the cell to which the UL resources are allocated using the CIF. When the cross carrier scheduling for the SCell is not configured, the message 3 may be transmitted through the UL CC which is SIB2-linked with the DL CC where the RACH response has been received. When CIF of 3 bits is further included message 3, the total bit number of message 3 may increase. However, it is possible to maintain the total bit number using an existing specific field as the usage of CIF. For example, the "TPC command for scheduled PUSCH" field may be substituted as the CIF.

The contention resolution message may be transmitted always in the PCell or SCell, or when the cross carrier scheduling for the SCell is configured, the contention resolution message may be transmitted in the cell which the CIF indicates.

The method of applying the cross carrier scheduling in random access procedure described above is described below through embodiments.

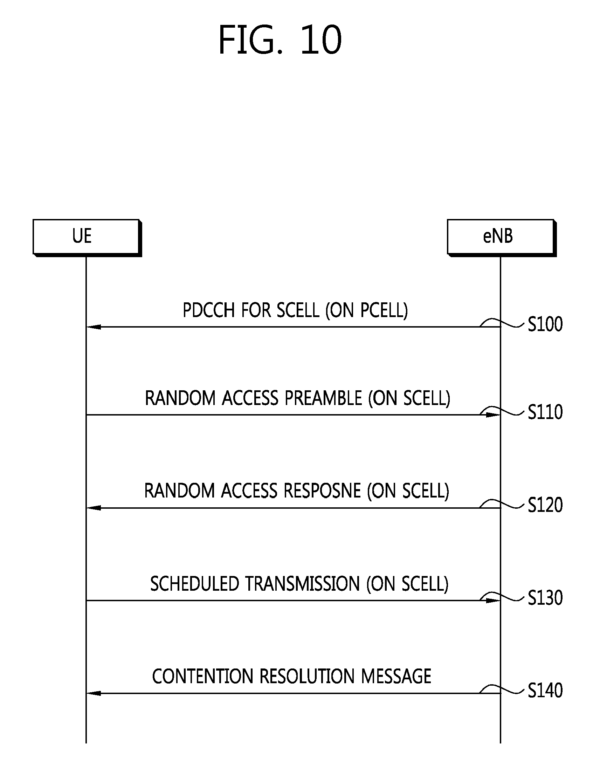

FIG. 10 shows an embodiment of a proposed method of performing a random access.

Referring to FIG. 10, in step S100, the base station transmits the PDCCH order for initiating the random access procedure of the SCell to the UE through the PCell after a specific SCell is added or activated. In step S110, the UE transmits the PRACH preamble to the base station through the SCell. In step S120, the base station transmits the RACH response to the UE through the SCell as a response to the PRACH preamble. In step S130, the UE transmits the scheduled transmission to the base station through the SCell. In step S 140, the base station transmits the contention resolution message to the UE.

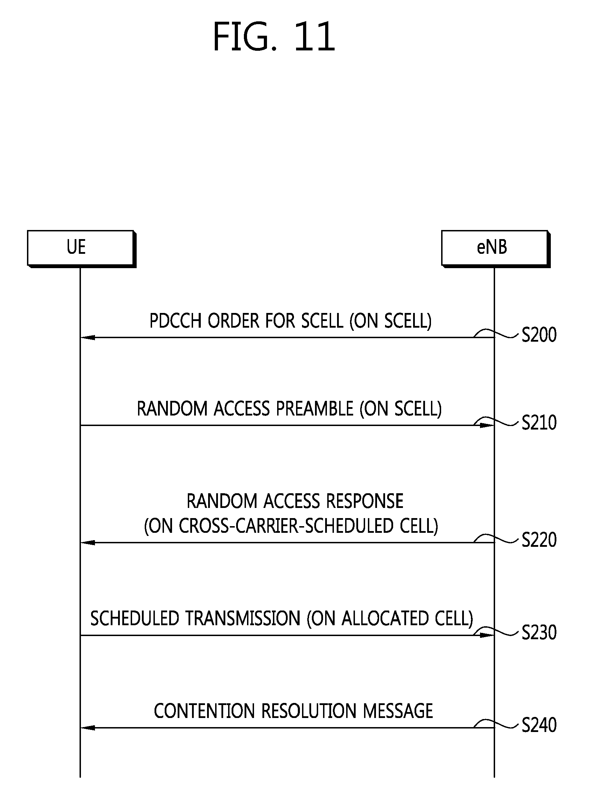

FIG. 11 shows another embodiment of a proposed method of performing a random access.

Referring to FIG. 11, in step S200, the base station transmits the PDCCH order for initiating the random access procedure of the SCell to the UE through the SCell after a specific SCell is added or activated. In step S210, the UE transmits the PRACH preamble to the base station through the SCell. The following procedure may depend on whether the cross carrier scheduling is applied for the SCell. When the cross carrier scheduling is not applied, in step S220, the base station transmits the RACH response to the UE through the SCell as a response to the PRACH preamble. In step S230, the UE transmits the scheduled transmission to the base station through the SCell. In step S240, the base station transmits the contention resolution message to the UE. When the cross carrier scheduling is applied, in step S220, the base station transmits the RACH response to the UE through the cell indicated by the CIF as a response to the PRACH preamble. In step S230, the UE transmits the scheduled transmission to the UE through the cell indicated by the CIF (allocated cell). In step S240, the base station transmits the contention resolution message to the UE.

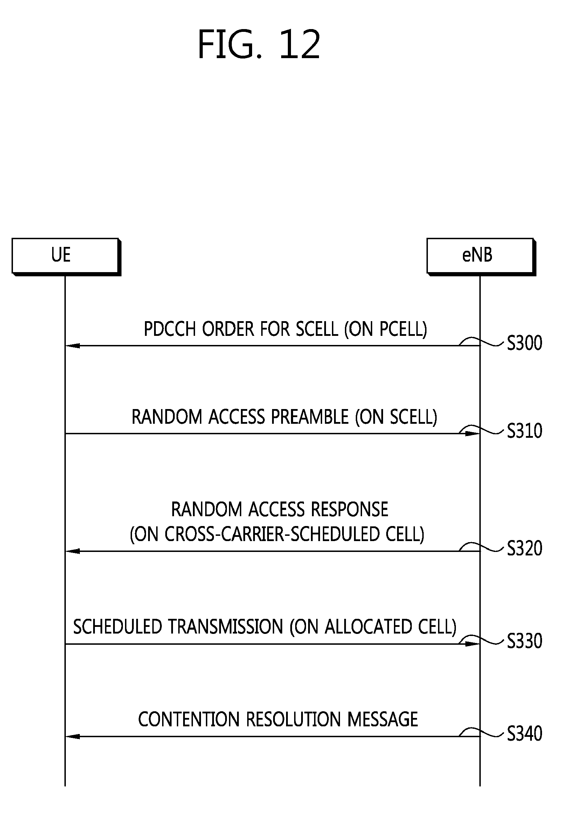

FIG. 12 shows another embodiment of a proposed method of performing a random access.

Referring to FIG. 12, in step S300, the base station transmits the PDCCH order for initiating the random access procedure of the SCell to the UE through the PCell after a specific SCell is added or activated. In step S310, the UE transmits the PRACH preamble to the base station through the SCell. The following procedure may depend on whether the cross carrier scheduling is applied for the SCell. When the cross carrier scheduling is not applied, in step S320, the base station transmits the RACH response to the UE through the SCell as a response to the PRACH preamble. In step S330, the UE transmits the scheduled transmission to the base station through the SCell. In step S340, the base station transmits the contention resolution message to the UE. When the cross carrier scheduling is applied, in step S320, the base station transmits the RACH response to the UE through the cell indicated by the CIF as a response to the PRACH preamble. In step S330, the UE transmits the scheduled transmission to the base station through the cell indicated by the CIF (allocated cell). In step S340, the base station transmits the contention resolution message to the UE.

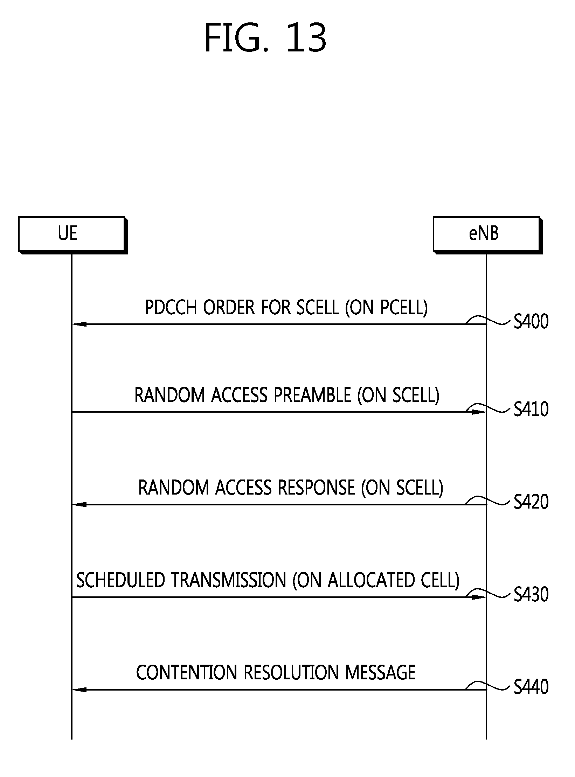

FIG. 13 shows another embodiment of a proposed method of performing a random access.

Referring to FIG. 13, in step S400, the base station transmits the PDCCH order for initiating the random access procedure of the SCell to the UE through the PCell after a particular SCell is added or activated. In step S410, the UE transmits the PRACH preamble to the base station through the SCell. The following procedure may depend on whether the cross carrier scheduling is applied for the SCell. When the cross carrier scheduling is not applied, in step S420, the base station transmits the RACH response to the UE through the SCell as a response to the PRACH preamble. In step S430, the UE transmits the scheduled transmission to the base station through the SCell. In step S440, the base station transmits the contention resolution message to the UE. When the cross carrier scheduling is applied, in step S420, the base station transmits the RACH response to the UE through the SCell in response to the PRACH preamble. In step S430, the UE transmits the scheduled transmission to the base station through the cell indicated by the CIF (allocated cell). In step S340, the base station transmits the contention resolution message to the UE. That is, the RACH response is transmitted always through the SCell, and thus the confusion of the UE according to the reception of the RACH response may be prevented.

Meanwhile, when the PCell and the SCell belong to a different cell group, the PCell and the SCell may use different UL transmission timings, and thus there would be no basis for the UL transmission timing. However, after the SCell is activated, the UE may transmit UL transmissions such as a sounding reference signal (SRS) and CQI and may transmit ACK/NACK signals for the PDSCH which is allocated from the PDCCH. Hence, the UL transmission in the SCell before performing the random access may be a problem. Specifically, when the SCell, which belongs to a cell group other than the cell group to which the PCell belongs, is activated and the UL-transmission-timing-adjusted cell does not exist in the cell group, a problem may occur. Furthermore, when the SCell, which belongs to a cell group other than the cell group to which the PCell belongs, is activated and another SCell does not exist in the cell group, a problem may occur. Furthermore, when the SCell, which belongs to a cell group other than the cell group to which the PCell belongs, is activated and the SCell has the smallest cell index in the cell group, a problem may occur. As such, there is a need for the definition for the operation of the UE when the SCell, which belongs to a cell group other than the cell group to which the PCell belongs, is activated.

1) The UE may not perform UL transmission through the SCell which belongs to a cell group other than the cell group to which the PCell belongs. The UL transmission timing may not be determined when the SCell, which belongs to a cell group other than the cell group to which the PCell belongs, is added or activated. The UL transmission through the SCell in such a state may be applied as interference to an adjacent frequency. Hence, the UE may not perform the UL transmission through the SCell in the state where the UL transmission timing is not adjusted. Furthermore, even if the UL grant for the SCell is received to the UE through the PDCCH, the UE may repeal the UL grant.

2) Furthermore, the UE may not monitor the PDCCH where the UL grant for the SCell is received. However, the UE may monitor the PDCCH where the DL grant is received. Even in the state where the UL transmission timing has not been adjusted, the DL reception may be performed. For example, the UE may transmit the ACK/NACK signal for the DL reception to the base station through the PCell which has already obtained the synchronization. Furthermore, the UE may monitor the PDCCH where control information other than the grant such as DCI format 3 for power control may be monitored.

3) Furthermore, the UE may not monitor all PDCCHs for the SCell. Hence, the UL transmission of the UE is not transmitted through the SCell, and the DL reception of the UE is not performed.

The above-described method may be applied until the random access procedure for the SCell is initiated after the SCell is added or activated. Furthermore, the above-described method may be applied until the random access procedure for the SCell is completed. Furthermore, the above-described method may be applied until the RACH response is transmitted through the SCell.

In the above description, it is assumed that the SCell includes only one cell, but this is only for the convenience of description, and the present invention is not limited to the assumption. That is, in the above description, the SCell may be one cell group including one or more cells except the PCell. Likewise, the PCell may also be one cell group including a cell other than the PCell.

Furthermore, the above-described random access method may be applied even when the UL extension carrier is defined. For example, the PDCCH order for initiating the random access procedure for the UL extension carrier may be transmitted always through the SCell. Furthermore, the PDCCH order for initiating the random access procedure for the UL extension carrier may be transmitted always through the PCell. At this time, the second CIF using the existing remaining bits within the DCI format 1A may be defined. Furthermore, when the cross carrier scheduling for the UL extension carrier is configured, the PDCCH order, which orders the initiation of the random access procedure for the UL extension carrier, may be transmitted in the cell which is indicated by the CIF. Likewise, the RACH response of the random access procedure for the UL extension carrier may be transmitted always through the PCell. At this time, the CIF may be defined within the RACH response. The RACH response of the random access procedure for the UL extension carrier may be transmitted always through the SCell. Furthermore, when the cross carrier scheduling for the UL extension carrier is configured, the RACH response of the random access procedure for the UL extension carrier may be transmitted in the cell indicated by the CIF.

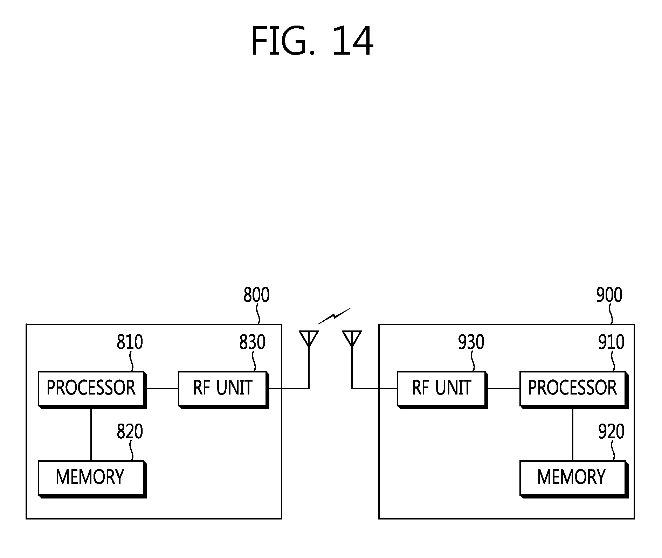

FIG. 14 is a block diagram showing wireless communication system to implement an embodiment of the present invention.

A base station 800 includes a processor 810, a memory 820, and an RF (radio frequency) unit 830. The processor 810 may be configured to implement proposed functions, procedures, and/or methods in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

A user equipment 900 may include a processor 910, a memory 920 and a RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope and spirit of the present disclosure.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the spirit and scope of the appended claims.

**Claims**

1. A method of performing, by a user equipment (UE), a random access in a wireless communication system, the method comprising:

   receiving, from a base station, a physical downlink control channel (PDCCH) order which orders initiation of the random access for a secondary cell (SCell), based on whether a cross-carrier scheduling of the SCell is supported;
   transmitting a physical random access channel (PRACH) preamble to the base station through the SCell; and
   transmitting a RACH response to the base station as a response to the PRARH preamble, based on whether the cross-carrier scheduling of the SCell is supported,
   wherein the SCell and a primary cell (PCell) form a carrier aggregation (CA) system,
   wherein the PCell is a cell where the UE performs a radio resource control (RRC) connection with the base station, and
   wherein the SCell is at least one cell among remaining cells other than the PCell in the CA system.

2. The method of claim 1, wherein the PDCCH order is received through the SCell.

3. The method of claim 1, wherein the PDCCH order is received through the PCell.

4. The method of claim 3, wherein the PDCCH order includes a carrier indicator field (CIF) for a random access which indicates the SCell.

5. The method of claim 3, wherein the PDCCH order is received through at least one of a common search space (CSS) or a UE-specific search space (USS).

6. The method of claim 1, wherein, when the cross carrier scheduling of the SCell is supported, the PDCCH order is received through a cell where the cross carrier scheduling is configured, and
   wherein a CIF, included in the PDCCH, for a random access order indicates a cell where the random access is performed.

7. The method of claim 6, wherein the PDCCH order is received through the CSS.

8. The method of claim 1, wherein the RACH response is received through the PCell.

9. The method of claim 1, wherein the RACH response includes a CIF which indicates the SCell.

10. The method of claim 1, wherein the RACH response is received through the SCell.

11. The method of claim 1, wherein, when the cross carrier scheduling of the SCell is supported, the RACH response is received through a cell where the cross carrier scheduling is configured, and
   wherein a CIF, included in the RACH response, for a random access indicates a cell where the PRACH preamble is transmitted.

12. The method of claim 1, wherein the SCell is an UL extension carrier which cannot operate as a stand-alone carrier.

13. The method of claim 1, wherein the PCell is a cell which provides at least one of non-access stratum (NAS) mobility information and a security input at the time of an RRC establishment, an RRC re-establishment, or a handover.

14. A user equipment (UE) for performing a random access in a wireless communication system, the UE comprising:

   a radio frequency (RF) unit for transmitting or receiving a radio signal; and
   a processor which is connected with the RF unit, and configured to:

       receive, from a base station, a physical downlink control channel (PDCCH) order which orders initiation of the random access for a secondary cell (SCell), based on whether a cross-carrier scheduling of the SCell is supported;
       transmit a physical random access channel (PRACH) preamble to the base station through the SCell; and
       transmit a RACH response to the base station as a response to the PRACH preamble, based on whether the cross-carrier scheduling of the SCell is supported,
       wherein the SCell and a primary cell (PCell) form a carrier aggregation (CA) system,
       wherein the PCell is a cell where the UE performs a radio resource control (RRC) connection with the base station, and
       wherein the SCell is at least one cell among remaining cells other than the PCell in the CA system.

# FIG. 2

RADIO FRAME

SLOT

| #0 | #1 | #2 | ... | #18 | #19 |

SUBFRAME

# FIG. 3

1 DOWNLINK SLOT

7 OFDM SYMBOL

$k = N_{RB} \times 12-1$

RESOURCE BLOCK
7×12 RESOURCE ELEMENT

RESOURCE ELEMENT (k,ℓ)

$N_{RB} \times 12$ SUBCARRIER

12 SUBCARRIER

$k=0$

$\ell=0$          $\ell=6$

# FIG. 4

CONTROL REGION     DATA REGION

FIRST SLOT     SECOND SLOT

FREQUENCY

SUBFRAME

TIME

# FIG. 5

| | m=1 | m=0 |
| CONTROL REGION | m=3 | m=2 |
| DATA REGION | | |
| CONTROL REGION | m=2 | m=3 |
| | m=0 | m=1 |

FIRST SLOT | SECOND SLOT

SUBFRAME

FREQUENCY

TIME

# FIG. 6

FIRST DL CC (PDCCH MONITORING DL CC)   SECOND DL CC   THIRD DL CC

PDCCH

SUBFRAME   PDSCH

CIF

CIF

CIF

# FIG. 7

TIME →

(a)

DL SIGNAL OF FIRST CELL

UL SUBFRAME OF FIRST CELL

BS TRANSMISSION

DL PROPAGATION DELAY OF FIRST CELL

UE RECEPTION

$TA_1$

UE TRANSMISSION

UL PROPAGATION DELAY OF FIRST CELL

BS RECEPTION

(b)

DL SIGNAL OF SECOND CELL

UL SUBFRAME OF SECOND CELL

BS TRANSMISSION

DL PROPAGATION DELAY OF SECOND CELL

UE RECEPTION

$TA_1$

UE TRANSMISSION

UL PROPAGATION DELAY OF SECOND CELL

BS RECEPTION

EP 2 733 874 A2

# FIG. 8

# FIG. 9

(a)

UE — eNB

① RANDOM ACCESS PREAMBLE — S61

② RANDOM ACCESS RESPONSE — S62

③ SCHEDULED TRANSMISSION — S63

④ CONTENTION RESOLUTION MESSAGE — S64

(b)

UE — eNB

ALLOCATE RANDOM ACCESS PREAMBLE — S70

① RANDOM ACCESS PREAMBLE — S71

② RANDOM ACCESS RESPONSE — S72

# FIG. 10

UE
eNB

PDCCH FOR SCELL (ON PCELL) — S100

RANDOM ACCESS PREAMBLE (ON SCELL) — S110

RANDOM ACCESS RESPOSNE (ON SCELL) — S120

SCHEDULED TRANSMISSION (ON SCELL) — S130

CONTENTION RESOLUTION MESSAGE — S140

# FIG. 11

# FIG. 12

UE

eNB

PDCCH ORDER FOR SCELL (ON PCELL)

S300

RANDOM ACCESS PREAMBLE (ON SCELL)

S310

RANDOM ACCESS RESPONSE
(ON CROSS-CARRIER-SCHEDULED CELL)

S320

SCHEDULED TRANSMISSION (ON ALLOCATED CELL)

S330

CONTENTION RESOLUTION MESSAGE

S340

# FIG. 13

UE          eNB

PDCCH ORDER FOR SCELL (ON PCELL) — S400

RANDOM ACCESS PREAMBLE (ON SCELL) — S410

RANDOM ACCESS RESPONSE (ON SCELL) — S420

SCHEDULED TRANSMISSION (ON ALLOCATED CELL) — S430

CONTENTION RESOLUTION MESSAGE — S440

# FIG. 14